# EUROPEAN PATENT APPLICATION

(11) **EP 2 624 579 A2**
(43) Date of publication of application: **07.08.2013**
(21) Application number: 13150430.0
(22) Date of filing: 07.01.2013
(51) Int. Cl.: H04N 21/258

(54) **Server, client apparatus, and service providing method and control method thereof**

(30) Priority: 13.01.2012 KR 20120004534
(71) Applicant: Samsung Electronics Co., Ltd, Gyeonggi-do 443-742 (KR)
(72) Inventor: YANG, Min-seok, Gyeonggi-do (KR)
(74) Representative: Hewett, Jonathan Michael Richard

(57) **Abstract**

A server controlling method is disclosed. The server controlling method includes receiving uploading of a preferable channel list, and reconfiguring a preferable channel list based on location information received from a user and providing the reconfigured preferable channel list, in a case where there is a request by the user.

## Description

The present invention relates to a server, client apparatus, and control method thereof. More particularly, the present invention relates to a server and client apparatus capable of providing a preferable channel list, and a service providing method and control method thereof.

A general broadcast receiving apparatus receives a broadcasting signal, processes the broadcasting signal, and then outputs the processed broadcasting signal on a screen. Meanwhile, in case where a user intends to convert a broadcast into a broadcast of another channel, the user may convert the channel by inputting a channel number using a remote control, an external control key, or by pressing an upper/lower moving button while the broadcast is being output on a screen.

However, due to an increasing supply of cable televisions and digital televisions, the number of channels that a user can select is increasing. Thus, it has become difficult for the user to remember the channel numbers and broadcasts.

Accordingly, of the cable broadcasting and digital broadcasting channels, the user sets preferable channels by selecting and storing the channel he/she wishes to watch.

However, since a preferable channel set by the user is stored only in the corresponding broadcast receiving apparatus, the information cannot be used in other apparatuses.

In a related art, the channels may be stored in storage apparatuses, i.e., a USB memory, etc., in order to compensate this problem. However, even a same broadcast may have different channels allocated according to the area. Thus, there is a problem that corresponding functions cannot be used in other areas.

An aspect of the exemplary embodiments of the present invention relates to a server and client apparatus, which manages a preferable channel list through a user account, a service providing method, and a control method thereof.

According to an aspect of an exemplary embodiment, a service providing method of a server may include receiving uploading of a preferable channel list from a user; and reconfiguring the preferable channel list based on location information received from the user and providing the reconfigured preferable channel list when there is a request by the user.

The service providing method may further include searching for a channel ID corresponding to each channel information included in the uploaded received preferable channel list; and mapping the searched channel ID to the each channel information, and storing the mapped channel ID, wherein the reconfiguring the preferable channel list and providing the reconfigured preferable channel list provides channel information corresponding to the stored mapped channel ID based on the location information.

The searching for a channel ID may search for a channel ID corresponding to each channel included in the received uploaded preferable channel list through a prestored channel table, and the prestored channel table may include at least one of a channel number, area information, and broadcasting station information corresponding to each channel ID.

The channel information corresponding to the stored mapped channel ID may be at least one of a channel number and broadcasting station information of an area corresponding to the location information.

The channel information corresponding to the stored mapped channel ID may be an internet link address that a broadcasting station corresponding to the channel ID provides.

The service providing method may further include performing certification on the user; and storing the preferable channel list uploaded by the user in an account of the certified user.

According to another aspect of an exemplary embodiment, a control method of a client apparatus may include accessing a server, and performing user certification; obtaining location information of the client apparatus and transmitting the obtained location information to the server; and receiving, by a preferable channel list prestored in the server, a preferable channel list reconfigured based on the obtained location information.

The reconfigured preferable channel list may be a preferable channel list prestored in the server, in which channel information is reconfigured as channel information provided in an area corresponding to the obtained location information.

The control method may further include displaying a warning window which warns that it is impossible to provide a preferable channel list in the area corresponding to the location information in a case where it is impossible to provide the preferable channel list in the area corresponding to the location information.

According to another aspect of an exemplary embodiment, a service providing method of a system, which includes a server and client apparatus may include receiving, by a server, uploading of a preferable channel list from a user; accessing the server, performing user certification, obtaining location information, and transmitting the obtained location information to the server, by the client apparatus; and reconfiguring the preferable channel list based on the obtained location information received from the user and providing the reconfigured preferable channel list, by the server.

According to another aspect of an exemplary embodiment, a server may include a communicator which receives uploading of a preferable channel list from a user; and a controller which reconfigures the preferable channel list based on location information received from the user and provides the reconfigured preferable channel list, when there is a request by the user.

The controller may search for a channel ID corresponding to each channel information included in the uploaded preferable channel list, maps the searched channel ID to each channel information and stores the mapped searched channel ID, and provide channel information corresponding to the stored channel ID based on the location information received from the user.

The controller may search for a channel ID corresponding to each channel information included in the uploaded preferable channel list through a prestored channel table, and the prestored channel table may include at least one of a channel number, area information, and broadcasting station information corresponding to each channel ID. The channel information corresponding to the channel ID may be at least one of a channel number and broadcasting station information of an area corresponding to the location information.

The channel information corresponding to the channel ID may be an internet link address, which a broadcasting station corresponding to the channel ID provides.

The controller may perform certification on the user, and store the preferable channel list uploaded by a certified user in an account of the certified user.

According to another aspect of an exemplary embodiment, a client apparatus may include a communicator which accesses a server and performs user certification; and a controller which obtains location information and transmits the obtained location information to the server, and controls a preferable channel list prestored in the server to receive a preferable channel list reconfigured based on the obtained location information.

The reconfigured preferable channel list may be a preferable channel list prestored in the server, in which channel information is reconfigured as channel information provided in an area corresponding to the location information.

The client apparatus may further include a display unit, and the controller may control the display unit to display a warning window which warns that it is impossible to provide a preferable channel list in the area corresponding to the location information in a case where it is impossible to provide the preferable channel list in the area corresponding to the location information.

According to another aspect of an exemplary embodiment, a system which includes a server and client apparatus may include a server which receives uploading of a preferable channel list from a certified user, stores the uploaded preferable channel list, and reconfigures the uploaded preferable channel list based on location information received from the user, and provides the reconfigured preferable channel list; and a client apparatus which accesses the server, performs user certification, obtains location information, transmits the obtained location information to the server, and receives the reconfigured preferable channel list from the server.

According to a further aspect of an exemplary embodiment, a service providing method of a system, which includes a server and a plurality of client apparatuses may include a first client apparatus of the plurality of client apparatuses, performing user certification of a user, and uploading a preferable channel list; and the server storing the uploaded preferable channel list, performing another user certification when the user accesses the server through a second client apparatus of the plurality of client apparatuses, reconfiguring the stored preferable channel list based on location information received from the user, and transmitting the reconfigured preferable channel list to the second client apparatus.

The server storing the uploaded preferable channel list may further include mapping the uploaded preferable channel list to a channel ID, and storing the mapped preferable channel list.

The reconfiguring the stored preferable channel list based on location information received from the user may further include reconfiguring the stored preferable channel list into a format that is provided in an area corresponding to the location information received from the user.

The above and/or other aspects of the present invention will be more apparent by describing certain embodiments of the present invention with reference to the accompanying drawings, in which:
FIG. 1 is a view roughly illustrating a service system providing a wishlist service according to an exemplary embodiment;
FIG. 2 is a block diagram illustrating a configuration of a server according to an exemplary embodiment;
FIG. 3A is a block diagram illustrating a configuration of a client apparatus according to an exemplary embodiment;
FIG. 3B is a block diagram illustrating a detailed configuration of the client apparatus illustrated in FIG. 3A;
FIGs. 4A and 4B are views illustrating formats of a channel table according to various exemplary embodiments;
FIGs. 5A to 5E are views illustrating a format of a preferable channel list according to various exemplary embodiments;
FIG. 6 is a flowchart for explaining a server control method according to an exemplary embodiment;
FIG. 7 is a flowchart for explaining a control method of a client apparatus according to an exemplary embodiment; and
FIG. 8 is a sequence view for explaining operational relations among a server and client apparatuses according to an exemplary embodiment.

Certain exemplary embodiments are described in detail below with reference to the accompanying drawings.

In the following description, like drawing reference numerals are used for similar elements, even if they are in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

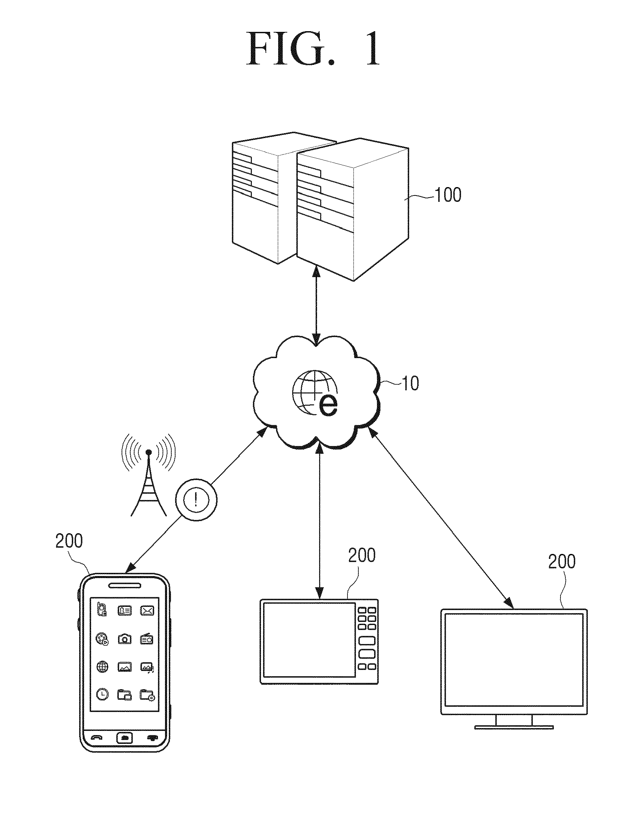

FIG. 1 is a view roughly illustrating a service system which provides a wishlist service according to an exemplary embodiment.

According to FIG. 1, the service system may consist of a server 100 and client apparatus 200.

The server 100 may be embodied to provide a preferable channel list according to an exemplary embodiment. For example, the server 100 may be embodied as a cloud server. The cloud server uses cloud computing technology.

Cloud computing refers to a computing technology based on the internet (i.e., over the cloud). Cloud computing is a web-based software service which has a program in a utility data server on the internet. The program in the utility data server calls, from time to time, a digital TV, computer, or mobile phone. Detailed explanation on cloud computing is omitted.

Specifically, the server 100 may be embodied as a server of a manufacturer of a client apparatus 200. The server 100 may be embodied as an additional server, for providing corresponding service, regardless of the client apparatus 200. For example, in a case where a preferable channel list providing service is provided in a particular application format, the server may be embodied as a server, related to the corresponding application.

First, a user may access the server 100 and upload a preferable channel list, in other words a list of desired channels, the list being in a format preferred by the user, corresponding, for example, to a series of specified channel numbers. For example, the user may access the server 100 through a client apparatus 200, i.e., a mobile phone, portable music player (PMP), digital TV, personal computer (PC), etc.

Specifically, the user may input user information, i.e., a user name, resident registration number, telephone number, identification number, and password through the client apparatus 200 and create an account in the server 100.

When user information is received from the client apparatus 200, the server 100 may store and manage the user information received in a storage unit (not illustrated). The storage unit stores information of various users.

In addition, the server 100 may allocate accounts corresponding to each user information. The server 100 may also store a preferable channel list, uploaded from the user, in an account of the corresponding user. In a user account provided in the server 100, there may be space for a stored channel list. The user may transmit location information of the user when uploading the preferable channel list to the server 100.

Then, the user becomes able to input identification information and password information through another client apparatus 200, log in to the server 100, and use the preferable channel list service.

The preferable channel list providing service aforementioned can be provided through corresponding menus in a digital TV. The preferable channel list may also be provided in application formats in a smart phone. However, embodiments are not merely limited to these cases. Thus, the preferable channel list providing service can be provided in various formats.

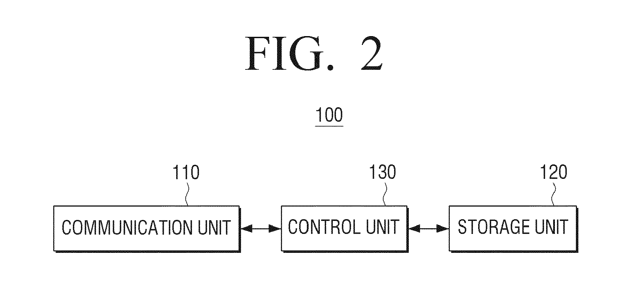

FIG. 2 is a block diagram illustrating a configuration of a server according to an exemplary embodiment of the present invention.

According to FIG. 2, the server 100 includes a communication unit 110, a storage unit 120, and a control unit 130.

The communication unit 110 may receive uploading of the preferable channel list from a certified user. For example, the communication unit 110 may communicate with the client apparatus 200 and receive uploads of the preferable channel list.

In addition, when there is a request by the certified user, the communication unit 110 may provide the preferable channel list, reconfigured based on the location information received from the user.

The storage unit 120 plays a function of storing the preferable channel list uploaded by the user.

Depending on circumstances, the storage unit 120 may not store the preferable channel list in its original state, i.e., as uploaded by the user. The storage unit 120 may map the preferable channel list to a predetermined channel ID, and then store the preferable channel list. Detailed explanation thereof is omitted.

The control unit 130 has a function of controlling overall operations of the server 100.

When there is a request by the user, the control unit 130 may reconfigure the preferable channel list stored in the storage unit 120 based on the location information received from the user. The control unit 130 may provide the reconfigured preferable channel list.

The control unit 130 may search for a channel ID corresponding to each channel information, included in the preferable channel list uploaded by the certified user through the communication unit 110. The control unit 130 may also map the searched channel ID to each channel information, and store the mapped searched channel ID. Accordingly, in the storage unit 120, the channel information included in the preferable channel list may be mapped in a predetermined channel ID format and stored.

The channel ID may be embodied as additional identifying information, separate from a channel's channel number, and broadcasting station information, included in the preferable channel list. However, this is merely an exemplary embodiment, and is not limited thereto. For example, the channel ID may be embodied as a channel number in a specific area (for example, Seoul).

When there is a request by the certified user, the control unit 130 may convert the channel ID, included in the preferable channel list stored in the account of the corresponding user, into corresponding channel information based on the location information received from the user. The control unit 130 may then provide the corresponding channel information. The channel information provided to the user may be a channel number, in an area corresponding to the location information received from the user.

In a case where the client apparatus 200 is embodied as a portable terminal, i.e., a smart phone, the channel information may be an internet link address corresponding to the location information received from the user. The area corresponds to the location from the user. Further, the broadcasting station corresponds to a channel ID in the area. However, a portable terminal provides DMB service. In the portable terminal, the channel information may be provided in a channel number format in the area corresponding to the location information received from the user.

The storage unit 120 may store a channel table for searching for channel information corresponding to the channel ID. The channel table may include at least one of a channel number, area information, and broadcasting station information corresponding to each channel ID.

The control unit 130 may update the channel table stored in the storage unit 120 at a regular time interval or at a request by the user or a service provider. For example, in a case where a channel number provided through a particular area by a particular broadcasting station is changed, a prestored channel table may be updated.

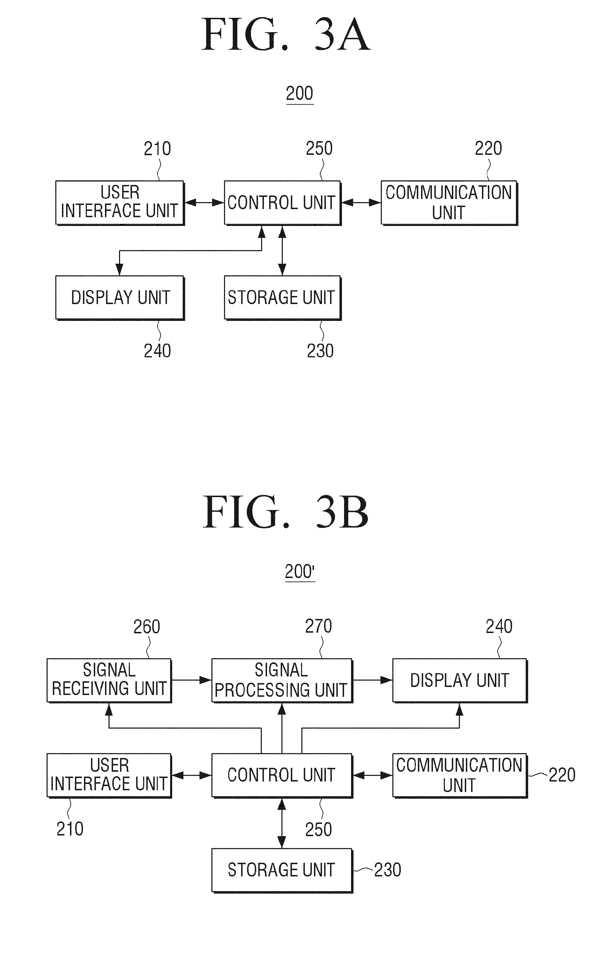

FIG. 3A is a block diagram illustrating a configuration of a client apparatus according to an exemplary embodiment.

According to FIG. 3a, the client apparatus 200 includes a user interface unit 210, communication unit 220, storage unit 230, display unit 240, and control unit 250.

The user interface unit 210 has a function of receiving a user signal.

The user interface unit 210 may be embodied in various formats, according to the apparatus type of the client apparatus 200.

For example, in a case where the client apparatus 200 is embodied as a TV or a set top box, the user interface unit 210 may be embodied as a remote control receiving unit which receives a remote control signal. Otherwise, in a case where the client apparatus 200 is embodied as a portable terminal, i.e., a smart phone, PMP, and MP3, the user interface unit 210 may be embodied as an input panel which or as a touch screen. The input panel includes a plurality of keys. The touch screen has a display and a touch pad, forming a mutual layer structure.

In the case where the user interface unit 210 is embodied in a touch screen format the user interface unit 210 may be used as a display unit 240. The touch screen format has a display and a touch pad in a mutual layer structure.

The communication unit 220 has a function of performing communication with the server 100. More specifically, the communication unit 220 may access the server 100 and perform user certification according to a control by the control unit 250.

In addition, the communication unit 220 has a function of transmitting the location information of the client apparatus 200 to the server 100. The location information may be transmitted through an internally installed GPS, provided in the client apparatus 200. More specifically, the client apparatus 200 may receive a GPS (Global Positioning System) signal transmitted from a GPS satellite and create the location information. The created location information may be transmitted to the server 100. For example, the client apparatus 200 may measure signal reaching time, distance, and present location from three or more GPS satellites. In addition, in order to minimize a margin of error, DGPS (Differential GPS) may be used.

In addition, the communication unit 220 has a function of receiving the reconfigured preferable channel list from the server 100. The reconfigured preferable channel list may be in a format where the preferable channel list, prestored in the server 100, has been reconfigured based on the location information of the client apparatus 200.

The storage unit 230 is a storage medium, where various programs necessary for operating the client apparatus 100 are stored. The storage unit 230 may be embodied as a memory, Hard Disk Drive (HDD), etc. For example, the storage unit 230 may have stored programs for performing operations of the control unit 250. The storage unit 230 may temporarily store data according to operations performed by the control unit 250.

The storage unit 230 has a function of storing the preferable channel list received from the server 100.

The display unit 240 may display various screens according to a control by the control unit 250.

When the display unit 240 receives a response that it is impossible to provide the preferable channel list in the area, corresponding to the location information transmitted through the communication unit 220, the display unit 240 may display a warning window that informs a user that it is impossible to provide the preferable channel list in the area of the received response.

The display unit 240 may be embodied as a CRT (Cathode Ray Tube), LCD (Liquid Crystal Display), TFT-LCD (Thin film Transistor Liquid Crystal Display), PDP (Plasma Display Panel), Flexible Display, and HMD (Head Mounted Display). However, the display unit is not limited to these embodiments.

The control unit 250 controls overall operations of the client apparatus 200.

The control unit 250 may obtain the location information of the client apparatus 200 and transmit the obtained location information to the server 100.

The control unit 250 may control the communication unit 220 to receive the preferable channel list corresponding to the area where the client apparatus 200 is located. Herein, the preferable channel list received through the communication unit 220 may be the preferable channel list prestored in the server 100, which has been reconfigured based on the location information transmitted from the client apparatus 200.

FIGS. 3B is a block diagram illustrating a detailed configuration of the client apparatus illustrated in FIG. 3A.

According to FIG. 3B, the client apparatus 200' includes the user interface unit 210, communication unit 220, storage unit 230, display unit 240, control unit 250, signal receiving unit 260, and signal processing unit 270. Detailed explanation on the elements of FIG. 3b that overlap with the elements in FIG. 3a is omitted.

The signal receiving unit 260 may receive various contents signals through a network or air.

For example, the signal receiving unit 260 receives broadcasting contents through antennas, cables, etc. The signal receiving unit 260 may also receive broadcasting contents through external devices or external communication networks.

The signal receiving unit 260 may be embodied in various formats. For example, in a case where the client apparatus 200' is embodied as a TV or a set top box, the signal receiving unit 260 may be embodied as a tuner or wireless communication module receiving broadcasting contents.

Otherwise, in a case where the client apparatus 200' is embodied as a portable terminal, e.g., a smart phone, PMP, and PDA, the signal receiving unit 260 may be embodied as a wireless communication module which supports communication networks. The communication networks may be 3G and Wifi networks.

The signal processing unit 270 performs a function of signal-processing various signals received through the signal receiving unit 260. Accordingly, the signal processing unit 270 may include signal processing elements, e.g., a demodulator, decoder, A/D converter, and scaler.

When a channel is selected, the control unit 250 may control the signal receiving unit 260 to receive the contents signal corresponding to the corresponding channel. The channel is included in the preferable channel list receive through the communication unit 220.

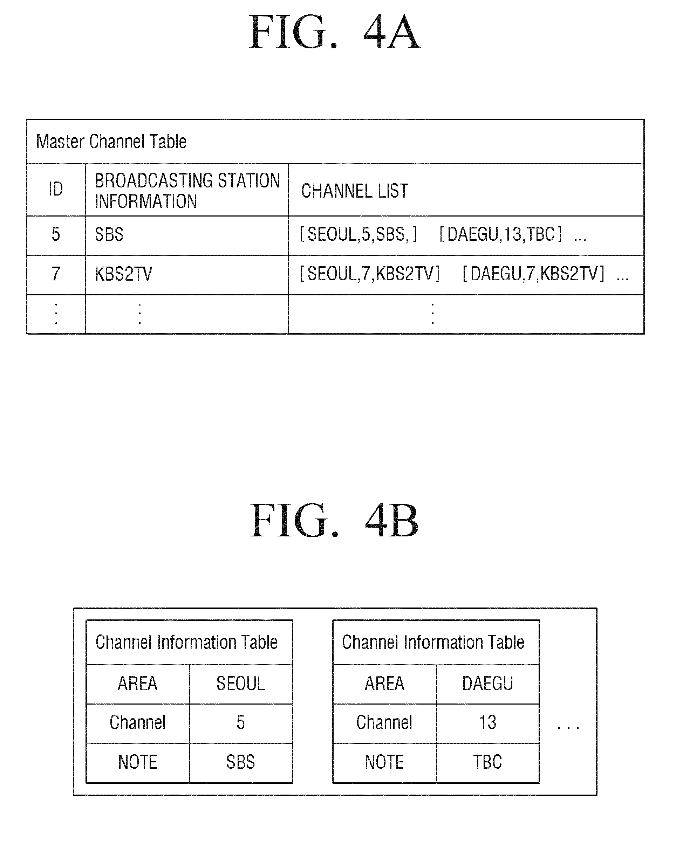

FIGs. 4A and 4B are views illustrating formats of channel tables according to various exemplary embodiments.

As illustrated in FIG. 4A, the channel table stored in the server 100 may be in a format which includes broadcasting station information and channel list information corresponding to each channel ID. The channel list information may include the name of broadcasting station in each area and channel number of each channel ID.

For example, in a case where the channel ID is 5, the information that the broadcasting station is "SBS", the name of broadcasting station of each area, and information on the channel number ([Seoul, 5, SBS], [Daegu, 13, TBC]), these contents may be stored in the server 100 in a table format. For convenience, this is referred to as a "Master Channel Table".

As illustrated in FIG. 4B, the channel table stored in the server 100 may store only the channel number of each area and the corresponding broadcasting station information. For convenience, this is referred to as "Channel Information Table".

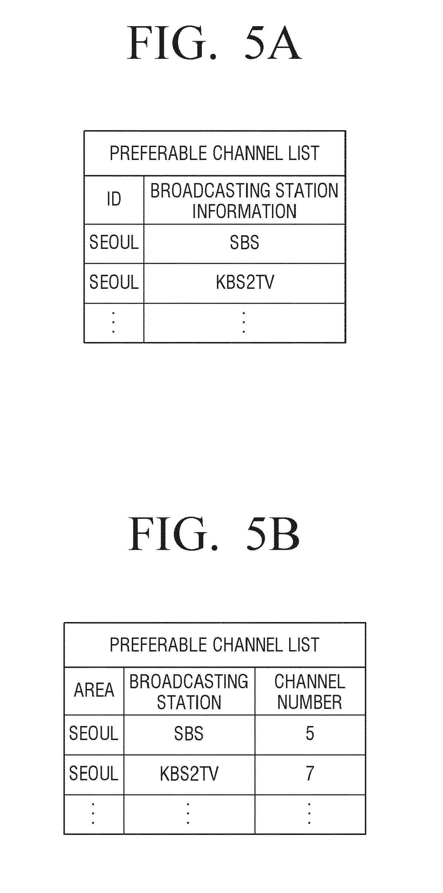

FIGs. 5A to 5E are views illustrating formats of a preferable channel list according to various exemplary embodiments.

FIG. 5A is a view illustrating a format of a preferable channel list stored in the server 100 according to an exemplary embodiment.

As illustrated in FIG. 5A, the preferable channel list stored in the server 100 may be in a format of storing the channel ID and broadcasting station information corresponding thereto. However, it is possible that only the channel ID is stored, and not the broadcasting station information.

As illustrated in FIG. 4A, when the preferable channel list is uploaded by the user, the server 100 may search for the corresponding channel ID through the "Master Channel Table". The server 100 may also store the searched channel ID.

In a case where the server 100 received uploading of the preferable channel list having channel number 5, 7, ... from the user, the server 100 may search for the channel ID 5, ₇, ... corresponding to the channel number, and store it in a master channel format.

Although the above exemplary embodiments are based on the case where the channel ID is set to be same as the channel number of Seoul area, this is merely an exemplary embodiment. Thus, it is possible to set the channel ID as identification information (for example, A, B,..., etc.), which has nothing to do with the channel number.

FIG. 5B is a view illustrating a format of a preferable channel list stored in the server 100 according to another exemplary embodiment.

As illustrated in FIG. 5B, the preferable channel list stored in the server 100 may be in a format where the user stores the information of the area where the user uploaded the preferable channel list, channel number included in the preferable channel list, and the corresponding broadcasting station information.

In a case where the server 100 received uploading of the preferable channel list having the channel number 5, 7, ... from a user located in Seoul, the server 100 may store the corresponding area information, channel number, and corresponding broadcasting station information.

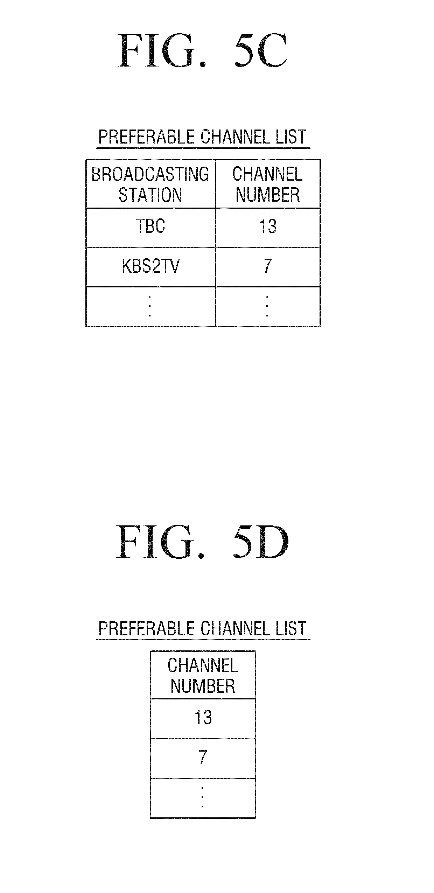

FIG. 5C is a view illustrating a format of a preferable channel list provided in a client apparatus 200, 200' according to an exemplary embodiment.

As illustrated in FIG. 5C, when there is a request from the certified user, the preferable channel list stored in the server 100 may be reconfigured based on the location information received from the user. The server 100 may provide the stored preferable list.

For example, in a case where a user who logs in as Daegu requests a preferable channel list, it is possible to reconfigure the preferable channel list. As illustrated in FIGS. 5A and 5B, the preferable channel list is in a format that corresponds to the channel information of Daegu. The reconfigured preferable channel list is then provided.

As illustrated in FIG. 5C, it is possible to provide the channel number of Daegu together with the corresponding broadcasting station information. As illustrated in FIG. 5D, it is also possible to transmit only the channel number of Daegu.

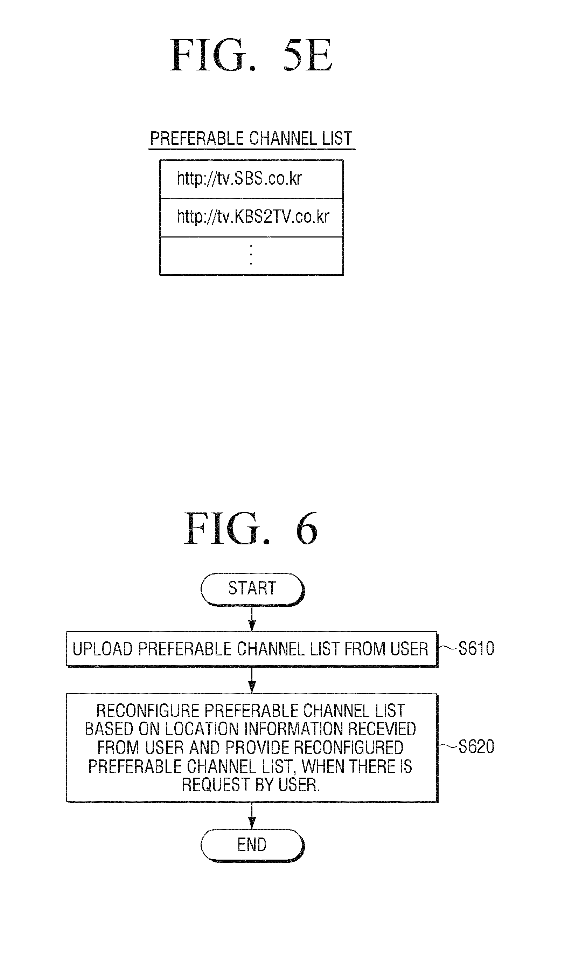

As illustrated in FIG. 5E, in a case where the client apparatus is embodied as a portable terminal, the preferable channel list may be an internet link address which provides the corresponding preferable channel. The portable terminal enables internet access.
However, in a portable terminal, which provides DMB functions, the preferable channel list may be provided in a format of the channel number of the area corresponding to the location information received from the user.

FIG. 6 is a flowchart for explaining a server controlling method according to an exemplary embodiment.

As illustrated in FIG. 6, according to the server controlling method, the preferable channel list may be uploaded by the user (S610).

In this case, after the certification of the user is performed, it is possible to receive uploading of the preferable channel list from the certified user. The uploaded preferable channel list may be stored in an account of the certified user.

Thereafter, when there is a request from the same user as the user who uploaded the preferable channel list, it is possible to reconfigure the preferable channel list based on the location information received from the user, and provide the reconfigured preferable channel list (S620).

In addition, it is possible to search for the channel ID corresponding to each channel information included in the preferable channel list uploaded by the user, map the searched channel ID to each channel information, and store the mapped channel ID.

More specifically, it is possible to search for the channel ID corresponding to each channel included in the uploaded preferable channel list through the prestored channel table. The prestored channel table may include at least one of the channel number, area information, and broadcasting station information corresponding to each channel ID.

In this case, the step of reconfiguring the preferable channel list and providing the reconfigured preferable channel list (S620) may provide the channel information corresponding to the channel ID stored based on the location information received from the user. The channel information corresponding to the channel ID may be the channel number or broadcasting station information of the area corresponding to the user's location information. Otherwise, the channel information corresponding to the channel may be the internet link address that the broadcasting station corresponding to the channel ID provides, depending on the embodiment format of the client apparatus. The client apparatus receives the corresponding channel list.

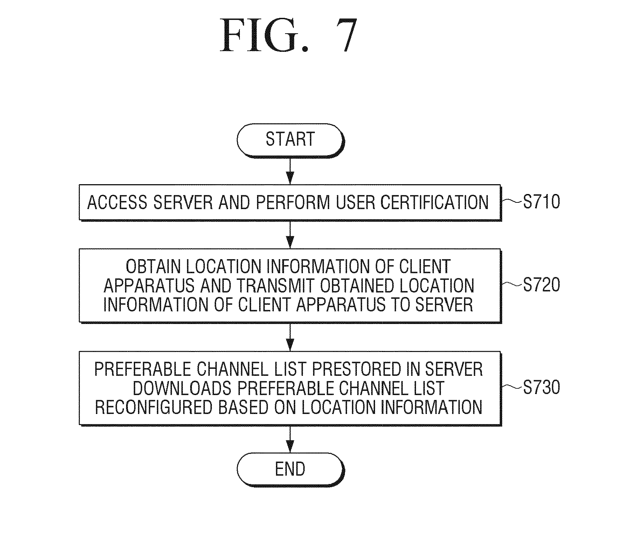

FIG. 7 is a flowchart for explaining the control method of the client apparatus according to an exemplary embodiment.

As illustrated in FIG. 7, according to the control method of the client, the method accesses and performs user certification (8710).

Next, the location information of the client apparatus, i.e., the user's location information is obtained and transmitted to the server (8720).

Then, the preferable channel list prestored in the server may receive the preferable channel list reconfigured based on the user's location information. The preferable channel list prestored in the server may be the preferable channel list uploaded by the certified user after the user certification is performed.

In addition, the reconfigured preferable channel list may be the preferable channel list prestored in the server, which includes channel information reconfigured as the channel information provided in the area corresponding to the user's location information.

Meanwhile, in a case where it is impossible to provide the preferable channel list in the area corresponding to the location information, a warning window may be displayed that informs a user that it is impossible to provide the preferable channel list in the area corresponding to the location information.

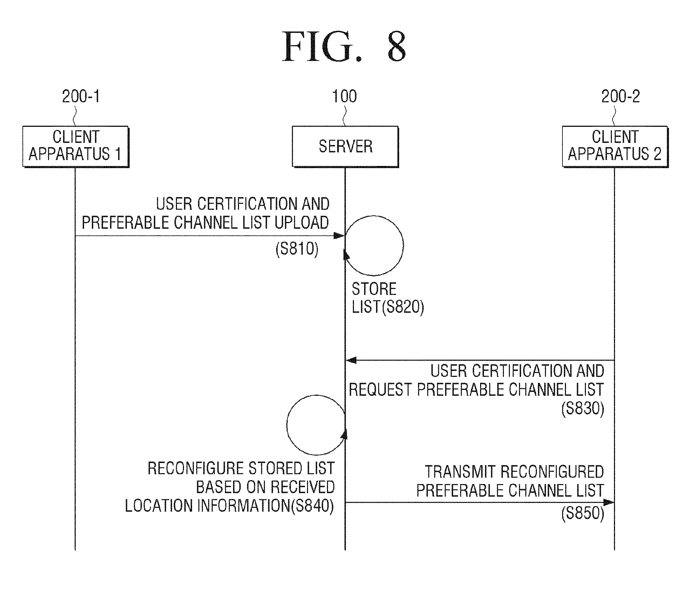

FIG. 8 is a sequence view for explaining operational relations among the server and client apparatuses, according to an exemplary embodiment.

According to FIG. 8, when the user accesses the server through the client apparatus 1 200-1, performs user certification, and uploads the preferable channel list (S810), the server 100 stores the uploaded preferable channel list (S820). In this case, the server 100 may map the uploaded preferable channel list to the channel ID and store the mapped preferable channel list. Detailed explanation is omitted.

Next, when the same user accesses the server 100 through a different client apparatus 2 200-2, performs user certification, and requests for the preferable channel list (S830), the server 100 reconfigures the prestored preferable channel list based on the location information received from the user (S840).

The server 100 may reconfigure the prestored preferable channel list into a format that can be provided in the area corresponding to the location information received from the user.

Next, the server 100 transmits the preferable channel list reconfigured in step S840 to the client apparatus 2 200-2 (S850).

In addition, embodiments may include a computer readable recording medium which includes programs for executing a server, and a control method of a client apparatus as aforementioned. The computer readable recording medium includes all kinds of recording apparatuses which store data that can be read by a computer system. ROM, RAM, CD-ROM, magnetic tape, floppy disk, optical data storage apparatus are examples of such a computer readable recording medium. In addition, the computer readable recording medium may be dispersed in a computer system connected by a network, and stores and executes codes readable by a computer in a dispersed method.

According to the embodiments, the user becomes able to use the same preferable channel list regardless of which client apparatus the user uses.

In addition, in a case where the user wishes to watch a certain broadcast in a certain area, the user becomes able to watch the broadcasting program that the user wishes to watch even when the user does not know the channel.

Although a few embodiments have been shown and described, it would be appreciated by those skilled in the art that changes may be made in this embodiment without departing from the invention, the scope of which is defined in the claims.

## Claims

1. A service providing method of a server, the method comprising:
receiving uploading of a preferable channel list from a user; and
reconfiguring the preferable channel list based on location information received from the user and providing the reconfigured preferable channel list when there is a request by the user.

2. The service providing method according to claim 1, further comprising:
searching for a channel ID corresponding to each channel information included in the received uploaded preferable channel list; and
mapping the searched channel ID to the each channel information, and storing the mapped channel ID,
wherein the reconfiguring the preferable channel list and providing the reconfigured preferable channel list provides channel information corresponding to the stored mapped channel ID based on the location information.

3. The service providing method according to claim 2, wherein the searching for a channel ID searches for a channel ID corresponding to each channel included in the received uploaded preferable channel list through a prestored channel table, and
the prestored channel table includes at least one of a channel number, area information, and broadcasting station information corresponding to each channel ID.

4. The service providing method according to claim 3, wherein the channel information corresponding to the stored mapped channel ID is at least one of a channel number and broadcasting station information of an area corresponding to the location information.

5. The service providing method according to anyone of claim 1 to 4, further comprising:
performing certification on the user; and
storing the preferable channel list uploaded by the user in an account of the certified user.

6. A control method of a client apparatus, the method comprising:
accessing a server, and performing user certification;
obtaining location information of the client apparatus and transmitting the obtained location information to the server; and
receiving, by a preferable channel list prestored in the server, a preferable channel list reconfigured based on the obtained location information.

7. The control method according to claim 6, wherein the reconfigured preferable channel list is a preferable channel list prestored in the server, in which channel information is reconfigured as channel information provided in an area corresponding to the obtained location information.

8. The control method according to claim 6 or 7, further comprising displaying a warning window which warns that it is impossible to provide a preferable channel list in the area corresponding to the location information in a case where it is impossible to provide the preferable channel list in the area corresponding to the location information.

9. A service providing method of a system, which includes a server and client apparatus, the method comprising:
receiving, by a server, uploading of a preferable channel list from a user;
accessing the server, performing user certification, obtaining location information, and transmitting the obtained location information to the server, by the client apparatus; and
reconfiguring the preferable channel list based on the obtained location information received from the user and providing the reconfigured preferable channel list, by the server.

10. A server comprising:
a communicator unit which receives uploading of a preferable channel list from a user; and
a controller which reconfigures the preferable channel list based on location information received from the user and provides the reconfigured preferable channel list when there is a request by the user.

11. The server according to claim 10, wherein the controller searches for a channel ID corresponding to each channel information included in the uploaded preferable channel list, maps the searched channel ID to each channel information and stores the mapped searched channel ID, and provides channel information corresponding to the stored channel ID based on the location information received from the user.

12. The server according to claim 11, wherein the controller searches for a channel ID corresponding to each channel information included in the uploaded preferable channel list through a prestored channel table, and
the prestored channel table includes at least one of a channel number, area information, and broadcasting station information corresponding to each channel ID.

13. The server according to claim 12, wherein the channel information corresponding to the channel ID is at least one of a channel number and broadcasting station information of an area corresponding to the location information.

14. A client apparatus comprising:
a communicator which accesses a server and performs user certification; and
a controller which obtains location information and transmits the obtained location information to the server, and controls a preferable channel list prestored in the server to receive a preferable channel list reconfigured based on the obtained location information.

15. A system which includes a server and client apparatus, the system comprising:
a server which receives uploading of a preferable channel list from a certified user, stores the uploaded preferable channel list, reconfigures the uploaded preferable channel list based on location information received from the user, and provides the reconfigured preferable channel list; and
a client apparatus which accesses the server, performs user certification, obtains location information, transmits the obtained location information to the server, and receives the reconfigured preferable channel list from the server.
